# EUROPEAN PATENT APPLICATION

(11) **EP 3 252 274 A1**
(43) Date of publication of application: **06.12.2017**
(21) Application number: 17173440.3
(22) Date of filing: 30.05.2017
(51) Int. Cl.: F01D 11/00, F16J 15/00, F01D 5/08

(54) **FLOW METERING AND DIRECTING RING SEAL**

(30) Priority: 01.06.2016 US 201615170451
(71) Applicant: United Technologies Corporation, Farmington, CT 06032 (US)
(72) Inventor: McLAUGHLIN, Brian C., Kennebunk, ME 04043 (US); CLARK, Thomas E., Sanford, ME 04073 (US)
(74) Representative: Gittins, Alex Michael

(57) **Abstract**

A seal ring (150) includes a disk (174) having a radially outer end (180A) and an orifice at a center forming a radially inner end (180B), a plurality of holes (176) extending through the disk (174), and a rail (178) having an annular shape extending axially away from the disk (174) at a position that is between the radially outer end (180A) and the plurality of holes (176) extending through the disk (174) with the rail (178) being configured to direct the flow of fluid.

## Description

### BACKGROUND

The present disclosure relates to a gas turbine engine and more particularly, to the metering and directing of cooling flow within the gas turbine engine through the use of a ring seal.

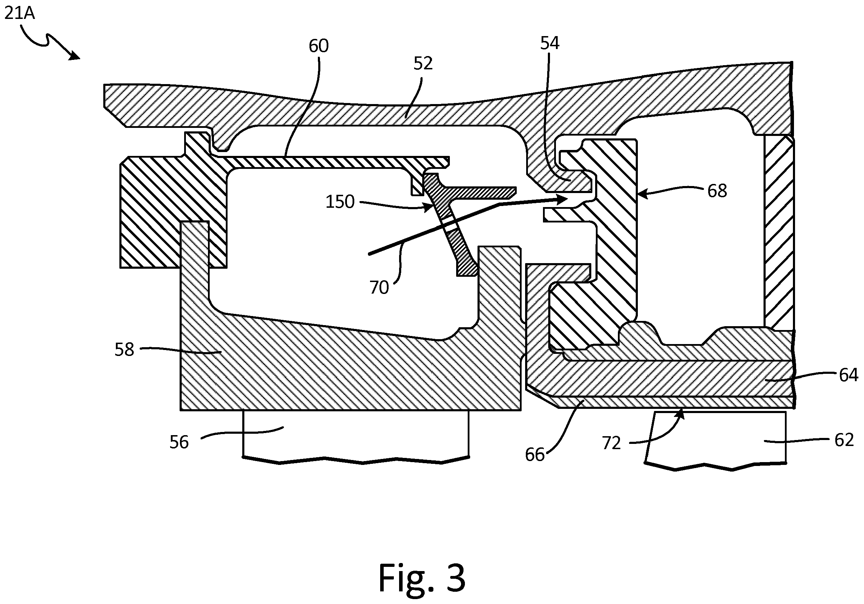

A gas turbine engine may include a secondary flow system that is configured to provide the internal components of the engine with cooling air in order to prevent or limit deterioration and damage to those components. However, the cooling air is sometimes taken from the compressor, so the cooling air can be at a higher temperature than the engine components in contact with ambient air, such as the turbine case. The secondary flow system allows for cooling air to flow through various passages within the engine to cool the engine components as needed. In the turbine section of the gas turbine engine, axial ring seals, also known as dog bone seals, are commonly used to meter flow through the use of dimensionally controlled holes extending through the ring seals. However, the cooling flow through the axial ring seals can unintentionally contact the turbine case (as shown in FIG. 3), causing impingement and high convective heat transfer that results in the turbine case expanding due to the high temperature of the cooling air and the relatively low temperature of the turbine case. Due to thermal expansion in a radially outward direction, the turbine case can pull the turbine blade outer air seal radially outward, increasing the space between the turbine blade and the blade outer air seal. The increase in space between the turbine blade and the blade outer air seal allows air to seep passed the turbine blades without exerting force on the turbine blades, causing a decrease in efficiency of the engine. Therefore, it is advantageous to prevent the cooling air from contacting the turbine case and causing the turbine case to thermally expand.

### SUMMARY

A seal ring includes a disk having a radially outer end and an orifice at a center forming a radially inner end, a plurality of holes extending through the disk, and a rail having an annular shape extending axially away from the disk at a position that is between the radially outer end and the plurality of holes extending through the disk with the rail being configured to direct the flow of fluid.

A metering seal in a turbine section of a gas turbine engine includes a sealing ring extending between a vane support on a radially outer end and a vane outer shroud on a radially inner end, a series of holes extending through the sealing ring, and a wall connected to the sealing ring. The wall has an annular shape and extending in an axial direction and is configured to direct the flow of a cooling fluid to at least partially prevent the cooling fluid from contacting a turbine case radially outward from the metering seal.

A seal, which the Applicant expressly reserves the right to claim independently, includes a ring with an enlarged radially outer end, an enlarged radially inner end, and a middle section between the radially outer end and the radially inner end and having a thickness that is less than a thickness of the radially outer end and a thickness of the radially inner end to form a dog-bone shape, the middle section having a plurality of holes. The seal also includes a rail having an annular shape that extends away from the middle section of the ring.

### BRIEF DESCRIPTION OF THE DRAWINGS

FIG. 1 is a side elevation cutaway view of a gas turbine engine.
FIG. 2A is a cross-sectional view of a first stage of a high pressure turbine section with a prior art ring seal.
FIG. 2B is a partial perspective view of the prior art ring seal interacting with a turbine case.
FIG. 3 is a cross-sectional view of a first stage of a high pressure turbine section with a first embodiment of a flow metering and directing axial ring seal.
FIG. 4 is a partial perspective view of the flow metering and directing axial ring seal.
FIG. 5 is a partial perspective view of the flow metering and directing axial ring seal interacting with a turbine case.
FIG. 6 is a cross-sectional view of the flow metering and directing axial ring seal.
FIG. 7 is a cross-sectional view of another embodiment of the flow metering and directing axial ring seal.

### DETAILED DESCRIPTION

A flow metering and directing ring seal for use in a gas turbine engine or another type of engine is disclosed herein that includes a disk with a plurality of flow metering holes extending through the disk and a flow directing annular rail extending away from the disk. The flow metering holes allow cooling air to flow through the gas turbine engine, including the internal components of the turbine section. The rail directs the flow of cooling air away from a turbine case radially outward from the ring seal and towards internal components of a turbine section axially downstream from the ring seal, preventing the cooling air from contacting the turbine case and ensuring the cooling air reaches the internal components of the turbine section to reduce deterioration and damage to the engine.

Without the rail, the cooling air can unintentionally interact with the turbine case, causing impingement and high convective heat transfer that results in the turbine case expanding due to the high temperature of the cooling air (the cooling air is usually taken from a compressor section of the engine, which results in the cooling air having a higher temperature than the ambient air surrounding the turbine case). Due to thermal expansion, the turbine case can expand radially outward and pull on a blade outer air seal, which is intended to limit a gap between the rotating turbine rotor blade and the outer shroud of a core gas path. With the blade outer air seal pulled radially outward, the gap between the turbine rotor blade and the outer shroud increases, allowing the air flowing through the core gas path to seep past the turbine blade resulting in a decrease in efficiency of the engine. Therefore, the flow metering and directing ring seal with the rail is important because the rail directs cooling air towards the internal components of the turbine section and away from the turbine case, reducing deterioration and damage to the engine and increasing efficiency of the engine by preventing the increase in the gap between the turbine rotor blade and the outer shroud of the core gas path through the turbine section.

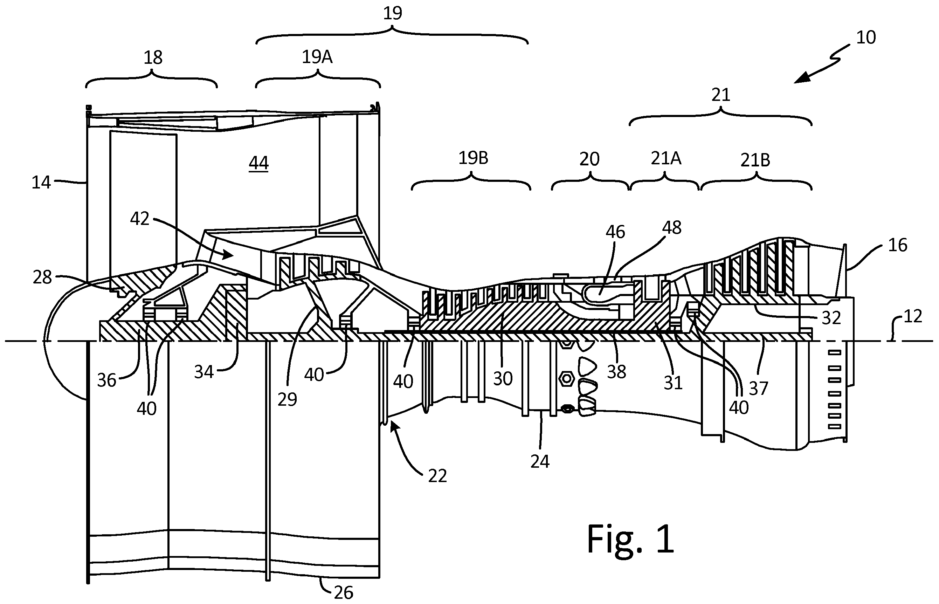

FIG. 1 is a side elevation cutaway view of gas turbine engine 10, which is shown as a turbofan engine for an aircraft propulsion system. Gas turbine engine 10 extends along axial centerline 12 between upstream airflow inlet 14 and downstream airflow exhaust 16.

Gas turbine engine 10 includes fan section 18, compressor section 19, combustor section 20, and turbine section 21. Compressor section 19 includes low pressure compressor ("LPC") section 19A and high pressure compressor ("HPC") section 19B. Turbine section 21 includes high pressure turbine ("HPT") section 21A and low pressure turbine ("LPT") section 21B.

Fan section 18, compressor section 19, combustor section 20, and turbine section 21 are arranged sequentially along centerline 12 within engine housing 22. Engine housing 22 includes inner case 24 (e.g., a core case) and outer case 26 (e.g., a fan case). Inner case 24 may house one or more of fan section 18, compressor 19, combustor section 20, and turbine section 21 (e.g., an engine core). Outer case 26 may house at least fan section 18.

Each of gas turbine engine sections 18, 19A, 19B, 21A and 21B includes fan rotor 28, LPC rotor 29, HPC rotor 30, HPT rotor 31, and LPT rotor 32, respectively. Each of these rotors 28, 29, 30, 21, and 32 includes a plurality of rotor blades arranged circumferentially around and connected to one or more respective rotor disks. The rotor blades, for example, may be formed integral with or mechanically fastened, welded, brazed, adhered, and/or otherwise attached to the respective rotor disk(s).

Fan rotor 28 is connected to gear train 34, for example, through fan shaft 36. Gear train 34 and LPC rotor 29 are connected to and driven by LPT rotor 32 through low speed shaft 37. The combination of at least LPC rotor 29, LPT rotor 32, and low speed shaft 37 may be referred to as "a low speed spool." HPC rotor 30 is connected to and driven by HPT rotor 31 through high speed shaft 38. The combination of at least HPC rotor 30, HPT rotor 31, and high speed shaft 38 may be referred to as "a high speed spool." Shafts 36, 37, and 38 are rotatably supported by a plurality of bearings 40, which can be rolling element bearings, thrust bearings, or other types of bearings. Each of these bearings 40 is connected to engine housing 22 by at least one stationary structure such as, for example, an annular support strut.

During operation, air enters gas turbine engine 10 through airflow inlet 14. Air is directed through fan section 18 and is then split into either core gas path 42 or bypass gas path 44. Core gas path 42 flows sequentially through fan section 18, compressor section 19, combustor section 20, and turbine section 21. The air within core gas path 42 may be referred to as "core air." Bypass gas path 44 flows through a duct between inner case 24 and outer case 26. The air within bypass gas path 44 may be referred to as "bypass air."

The core air is compressed by LPC rotor 29 and HPC rotor 30 and directed into combustion chamber 46 of combustor 48 in combustor section 20. Fuel is injected into combustion chamber 46 and mixed with the core air that has been compressed by compressor section 19 to provide a fuel-air mixture. This fuel-air mixture is ignited and combustion products thereof expand and flow through and sequentially cause HPT rotor 31 and LPT rotor 32 to rotate. The rotation of HPT rotor 31 and LPT rotor 32 respectively drive rotation of LPC rotor 29 and HPC rotor 30 and compression of the air received from core gas path 42. The rotation of LPT rotor 32 also drives rotation of fan rotor 28, which propels bypass air through and out of bypass gas path 44. The propulsion of the bypass air may account for a majority of thrust generated by gas turbine engine 10, which can be more than 75% of engine thrust. Gas turbine engine 10 of the present disclosure, however, is not limited to the foregoing exemplary thrust ratio.

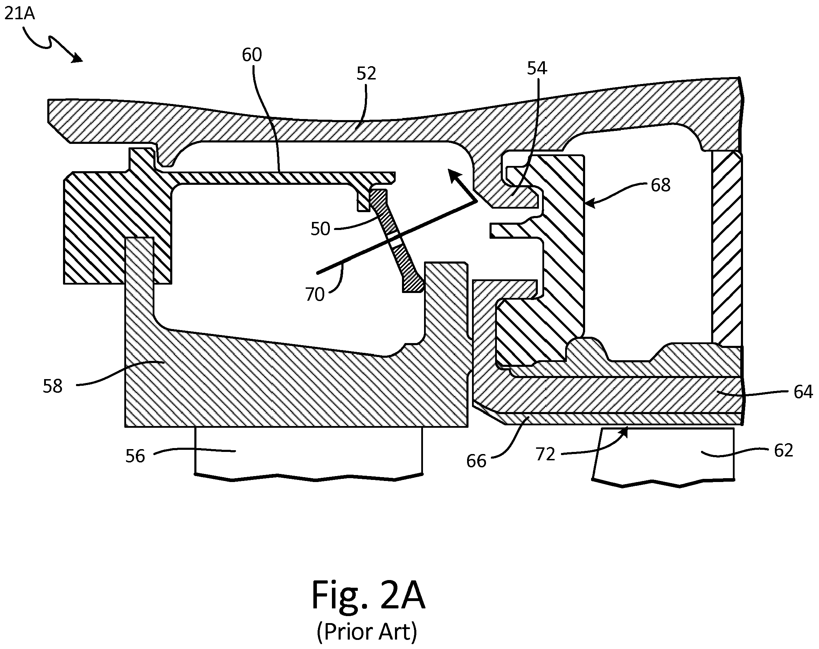

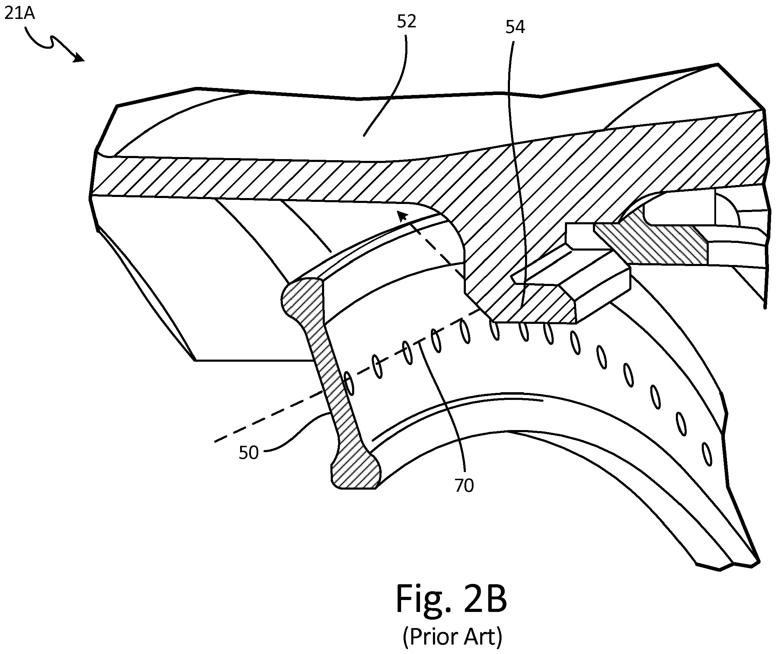

During operation, turbine section 21 can experience elevated temperatures due to the elevated temperature of the core air flowing through core gas path 42 after the core air has flowed through combustor section 20. To cool turbine section 21 to reduce deterioration and damage, cooling air is directed through the internal components of the turbine section. One strategy in the prior art for channeling cooling air was to use prior art ring seal 50, as shown in FIGS. 2A and 2B. FIG. 2A is a cross-sectional view of high pressure turbine section 21A with prior art ring seal 50, while FIG. 2B is a partial perspective view of prior art ring seal 50 interacting with inner case 24 (with the portion surrounding turbine section 21 referred to as turbine case 52). High pressure turbine section 21A includes prior art ring seal 50, turbine case 52 (with tab 54), vane 56, vane outer shroud 58, vane support 60, rotor blade 62, blade outer air seal 64, coating 66, and internal components 68. Cooling air flow 70 flows through prior art ring seal 50, and gap 72 is present between rotor blade 62 and coating 66 on blade outer air seal 64.

The prior art configuration meters cooling air flow 70 (taken from compressor section 19) flowing through holes in prior art ring seal 50. However, after flowing through holes in prior art ring seal 50, cooling air flow 70 can broaden and come into contact with an inner side of turbine case 52 and tab 54 instead of flowing axially rearward towards internal components 68 and blade outer air seal 64 to cool those components. Because a radially outer side of turbine case 52 of inner case 24 is in contact with the near ambient temperature bypass air flowing through bypass gas path 44, turbine case 52 is at a relatively low temperature as compared to the temperature of cooling air flow 70. Therefore, when the elevated temperature cooling air flow 70 contacts turbine case 52 and results in impingement and high convective heat transfer, turbine case 52 undergoes thermal expansion in a radially outward direction. With turbine case 52 being the structural component to which blade outer air seal 64 is attached, blade outer air seal 64 is pulled radially outward by turbine case 52. Because blade outer air seal 64 (with coating 66) is radially outward than when in ideal operation, gap 72 gets larger, allowing core air to seep past rotor blade 72. With core air seeping past rotor blade 72, less energy is transferred to rotor blade 72 by the core air, reducing the efficiency of gas turbine engine 10. Further, with cooling air flow 70 interacting with turbine case 52 instead of flowing to and cooling internal components 68, internal components 68 have an increased risk of deterioration and becoming damaged. Thus, a ring seal; such as ring seal 150 in FIGS. 3, 4, 5, and 6; that meters and directs flow is advantageous.

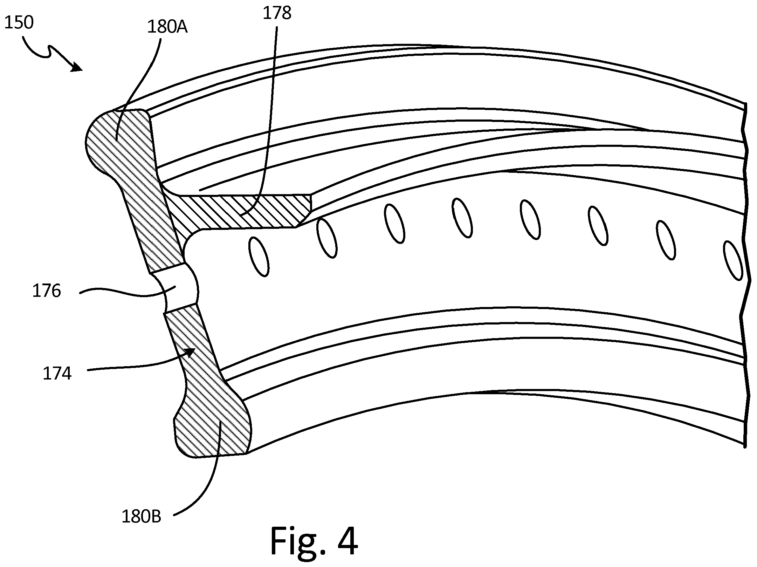

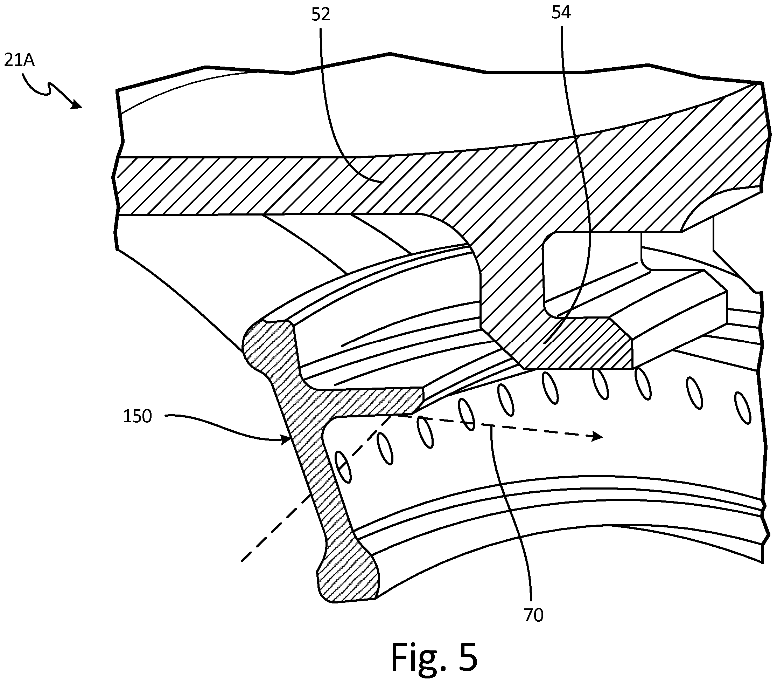

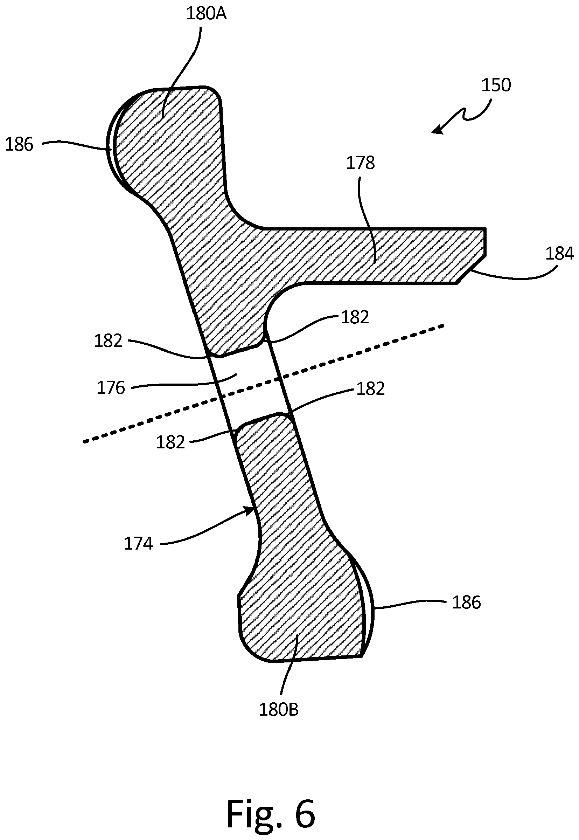

FIG. 3 is a cross-sectional view of high pressure turbine section 21A with a first embodiment of a flow metering and directing ring seal 150, FIG. 4 is a partial perspective view of ring seal 150, FIG. 5 is a partial perspective view of ring seal 150 interacting with turbine case 52, and FIG. 6 is a cross-sectional view of ring seal 150. High pressure turbine section 21A is shown in FIG. 3 with ring seal 150, turbine case 52 (with tab 54), vane 56, vane outer shroud 58, vane support 60, rotor blade 62, blade outer air seal 64, coating 66, and internal components 68. Cooling air flow 70 flows through ring seal 150, and gap 72 is present between rotor blade 62 and coating 66 on blade outer air seal 64. Ring seal 150 includes disk 174, plurality of holes 176, rail 178, radially outer end 180A, radially inner end 180B, disk hole fillets 182, rail taper 184, and hard-faced coating 186. The functionality and configuration of high pressure turbine section 21A, turbine case 52, vane 56, vane outer shroud 58, vane support 60, rotor blade 62, blade outer air seal 64 (with coating 66), and internal components 68 in FIGS. 3 and 5 are the same as those components in FIGS. 1, 2A, and 2B.

Ring seal 150 has an annular shape and is located in a similar position to prior art ring seal 50 of FIGS. 2A and 2B, with ring seal 150 spanning and sealing a substantially radial distance between vane outer shroud 58 and vane support 60. Ring seal 150 can be constructed from a variety of materials, including a nickel based alloy or another type of alloy, but should have sufficient strength and resilience to bridge this distance between vane outer shroud 58 and vane support 60 while also maintaining contact with both elements to provide a complete and satisfactory seal. Ring seal 150 should be able to handle the high temperatures of cooling air flow 70 without becoming damaged while still providing a satisfactory seal. Further, ring seal 150 should be constructed from a material that can be in contact with and does not damage vane outer shroud 58 and vane support 60. Ring seal 150 can include hard-faced coating 186 at contact points to ensure ring seal 150 does not damage vane outer shroud 58 and vane support 60 (or vice-versa) and a satisfactory seal is formed and maintained. The components of ring seal 150 discussed below can be individual pieces fastened together to form ring seal 150, or ring seal 150 can be one continuous and monolithic piece formed during the manufacturing process. Ring seal 150 can be constructed using a variety of manufacturing processes, including additive manufacturing. While ring seal 150 is disclosed as sealing the distance between vane outer shroud 58 and vane support 60, ring seal 150 can be configured to seal any distance in other areas of gas turbine engine 10 while also metering and directing a cooling air flow to necessary components.

Disk 174 (also referred to as a sealing ring or a ring) of ring seal 150 is an annular-shaped component that spans the distance between vane outer shroud 58 and vane support 60. As shown most easily in FIG. 4, disk 174 has an orifice (thus making disk 174 an annular shape) and is centered about centerline 12 of gas turbine engine 10. Disk 174 can be entirely in a radial direction or can be angled such that radially outer end 180A is axially forward from radially inner end 180B to form a frustoconical shape. Further, if the design of gas turbine engine requires, disk 174 can have another shape and configuration to span and seal a distance other than that shown in the disclosed drawings. A thickness of disk 174 can vary depending on the material used to construct disk 174, the distance that disk 174 must span, the number and surface area of the plurality of holes 176 in disk 174, the temperature of cooling air flow 70, and other factors. In the disclosed embodiment, the thickness of disk 174 at a middle section is approximately 0.152 centimeters (0.060 inches) with ring seal 150 being constructed from a nickel based alloy.

Radially outer end 180A of disk 174 is in contact with and adjacent to vane support 60, and radially inner end 180B of disk 174 is in contact with and adjacent to vane outer shroud 58. Radially outer end 180A can have a thickness that is the same as the thickness of disk 174 or can have an increase in thickness as compared to the middle section of disk 174 to aid in sealing ring seal 150 to vane support 60 and to provide additional structural rigidity and strength to ring seal 150. The increase in thickness can be a bulge that extends axially forward (as shown in FIG. 4), a bulge that extends axially rearward, or both. Similarly, radially inner end 180B can have a thickness that is the same as the thickness of disk 174 or can have an increase in thickness as compared to the middle section of disk 174 to aid in sealing ring seal 150 to vane outer shroud 58 and to provide additional structural rigidity and strength to ring seal 150. As with radially outer end 180A, radially inner end 180B can have the increase in thickness as a bulge that extends axially forward, a bulge that extends axially rearward, or both (as shown in FIG. 4). As shown in FIG. 4, disk 174 has a dog-bone shape with the radially outer end 180A and the radially inner end 180B having a bulb-shaped configuration. Radially outer end 180A and radially inner end 180B can have hard-faced coating 186. Hard-faced coating 186 is on a contact surface between ring seal 150 and vane outer shroud 58 and vane support 60; specifically, hard-faced coating 186 is on a forward facing surface of radially outer end 180A and on a rearward facing surface of radially inner end 180B. Hard-faced coating 186 aids in establishing and maintaining a complete seal while also protecting ring seal 150, vane outer shroud 58, and vane support 60 from damage due to contact and friction between components. Hard-faced coating 186 can be any type of coating that is configured to seal and protect ring seal 150, vane outer shroud 58, and vane support 60, including chromium carbide. Hard-faced coating 186 can be applied through a variety of means, including plasma spraying. While the disclosed embodiment shows hard-faced coating 186 only on ring seal 150 at radially outer end 180A and radially inner end 180B, hard-faced coating 186 and/or other coatings can be applied to ring seal 150 at other locations.

Disk 174 includes a plurality of holes 176 that extend through the middle section of disk 174. The plurality of holes 176 meter cooling air flow 70 through high pressure turbine section 21A. The plurality of holes 176 are spaced around disk 174 as most easily seen in FIG. 4, but the plurality of holes 176 do not need to be spaced equally from adjacent holes and the holes do not need to be the same radial distance from radially inner end 180B. Disk 174 can have any number of holes of the plurality of holes 176 depending on various design considerations, including the necessary amount of cooling air flow 70, the strength and rigidity requirements of ring seal 150, and others. In one embodiment, the number of the holes of the plurality of holes 176 is between 40 and 100. The plurality of holes 176 can have a configuration in which one hole is present per circumferential location (as shown in FIG. 4) or multiple holes are at the same circumferential location with the holes having a different radial distance from radially inner end 180B. Further, while the disclosed embodiment shows the plurality of holes 176 all having a similarly-sized circular shape, each of the plurality of holes 176 can have a different size (i.e., surface area) and/or shape other than a circular shape, depending on design considerations and the amount of cooling air flow 70 that is needed by internal components 68 and other components of gas turbine engine 10. Also, the size and shape of each hole of the plurality of holes 176 can be different than adjacent holes. Each of the plurality of holes 176 can have a consistent cross-section as the holes extend through disk 174, or the cross-section can vary to control/meter cooling air flow 70 as desired through the plurality of holes 176. The plurality of holes can extend through disk 174 at a variety of angles when measured from a surface of the middle section of disk 174, but the plurality of holes 176 as shown in FIGS. 3, 4, 5, and 6 extend through disk 174 at an angle that is approximately perpendicular to the surface of the middle section. The plurality of holes 176 can extend through disk 174 at a location that is closer to radially inner end 180B, closer to radially outer end 180A, or equidistant between the ends of disk 174. However, ring seal 150 with the plurality of holes 176 at a location that is approximately equidistant between radially outer end 180A and radially inner end 180B likely has a greater rigidity and strength than if the plurality of holes 176 were at another radial location.

Disk hole fillets 182 are located at a transition area between disk 174 and each of the plurality of holes 176. Disk hole fillets 182 are an annular, curved fillet on an axially forward transition area between an axially forward surface of the middle section of disk 174 and each of the plurality of holes 176 and on an axially rearward transition area between an axially rearward surface of the middles section of disk 174 and each of the plurality of holes 176. A radius of curvature of each disk hole fillet 182 can be constant around the annular fillet and the same on the axially forward surface as the fillet is on the axially rearward surface, or the radius of curvature can vary as each disk hole fillet 182 extends around each of the plurality of holes 182. Disk hole fillets 182 aid in metering cooling air flow 70 and in providing a smooth, laminar flow path through the plurality of holes 176. While the disclosed embodiment has disk hole fillets 182 on both sides of disk 174 and on each of the plurality of holes 176, seal ring 150 can include disk hole fillets 182 on only one or on neither of the sides of disk 174 and/or on only a portion of the plurality of holes 176. Disk hole fillets 182 can be formed through a variety of manufacturing processes, including additive manufacturing, molding or another type of forming, machining the plurality of holes 176 and disk hole fillets 182 after the rest of ring seal 150 has been constructed, or another method.

Rail 178 (also referred to as a wall) has a hollow cylindrical shape and is connected to a rearward side of the middle section of disk 174. Rail 178 direct cooling air flow 70 flowing through the plurality of holes 176 away from turbine case 52 and towards internal components 68. Cooling air flow 70 flowing through the plurality of holes 176 contacts rail 178 and is redirected to flow substantially axially rearward. Rail 178 extends away from disk 174 at a location between the plurality of holes 176 and radially outer end 180A, and rail 178 can extend away from disk 174 at any angle, including an angle that is perpendicular to disk 174, an angle that is an acute angle when measured from a radially inward portion of the middle section of disk 174, or another angle. As shown in the disclosure, disk 174 can be slightly angled with radially inner end 180B being rearward from radially outer end 180A, and rail 178 can extend rearward in a substantially axial direction (forming an acute angle between rail 178 and the radially inward portion of disk 174).

Rail 178 can have any length, such as a length that is 10% of the length of disk 174, making a ratio of the length of rail 178 to a distance between radially outer end 180A and radially inner end 180B (i.e., a length of disk 174) approximately 0.1. Further, rail 178 can have a length that is equal to the length of disk 174 for a ratio of 1.0. Rail 178 can have another length, such as a length that is between 10% and 100% of the length of disk 174 or a length that is larger. No matter what the length of rail 178 is, the length should be sufficiently long to direct cooling air flow 70 away from turbine case 52 and towards internal components 68 and other components in need of cooling air flow 70. The length of rail 178 can depend on a number of factors, including the diameter/surface area of each of the plurality of holes 176, the flow velocity of cooling air flow 70, the angle at which each of the plurality of holes 176 extends through disk 174, a distance from the plurality of holes 176 to rail 178, whether disk 174 is angled, and other factors.

A thickness of rail 178 (i.e., radial thickness) should be sufficient to withstand the high temperatures of cooling air flow 70 while also maintaining structural rigidity and strength. The thickness of rail 178 can vary depending on the material used to construct rail 178, the length of rail 178, the temperature of cooling air flow 70, and other factors. The thickness of rail 178 can be constant along the axial length of rail 178 or can vary such that the thickness of rail 178 is larger at a point closer to disk 174 and smaller at a point farther from disk 174. Further, the thickness of rail 178 can have other configurations, including a thickness that is greatest near a tip of rail 178, a thickness that is equal to the thickness of the middle section of disk 174, or other configurations. The thickness of rail 178 can be the same as the thickness of the middles section of disk 174 such that the ratio of the thickness of rail 178 to the thickness of disk 174 is approximately 1. In the disclosed embodiment, the thickness of rail 178 is approximately 0.152 centimeters (0.060 inches). Rail 178 can also include rail taper 184, which is an angled or curved fillet at the tip of rail 178. Rail taper 184 can be present on a radially inner side of rail 178, a radially outer side of rail 178, on both sides, or on neither side. Rail taper 184 aids in transitioning cooling air flow 70 to internal components 68.

Rail 178 can be fastened to disk 174 through a variety of means, including welding, braising, glue, bolts, or another fastener. Additionally, disk 174 and rail 178 can be one continuous and monolithic piece formed during the manufacturing process. A transition from disk 174 to rail 178 can include a fillet on one or both of the radially outer side and the radially inner side to increase rigidity and strength in that area. Rail 178 can be constructed from a variety of materials, including a nickel based alloy or another type of alloy, but should have sufficient strength and resilience to extend rearward from disk 174 while also maintaining structural rigidity and strength to direct cooling air flow 70.

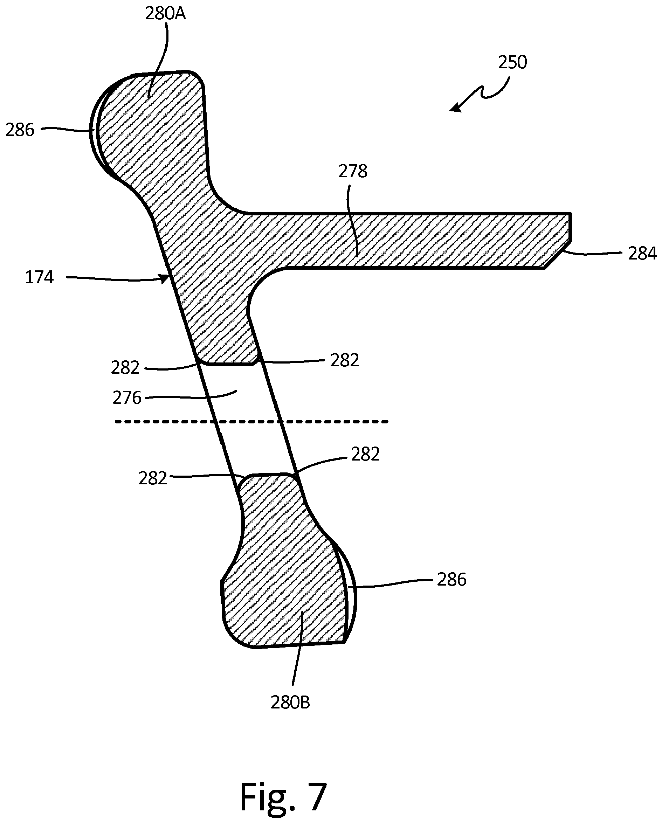

As mentioned above, rail 178 directs cooling air flow 70 after the air has passed through the plurality of holes 176. Rail 178 directs cooling air flow 70 away from turbine case 52, which is radially outward from rail 178, and towards internal components 68 in need of cooling air. Rail 178 prevents cooling air flow 70 from contacting turbine case 52 and ensures cooling air flow 70 reaches internal components 68 to reduce deterioration and damage to gas turbine engine 10. Depending on design considerations and the metering and directing needs of the seal, ring seal 150 can have a variety of shapes and configurations, such as the embodiment of FIG. 7.

FIG. 7 is a cross-sectional view of another embodiment of a ring seal. Ring seal 250 includes disk 274, plurality of holes 276, rail 278, radially outer end 280A, radially inner end 280B, disk hole fillets 282, rail taper 284, and hard-faced coating 286. The functionality and configuration of ring seal 250 is similar to that of ring seal 150 of FIGS. 3-6. However, ring seal 250 has rail 278 with a length that is longer than rail 178 and the configuration of the plurality of holes 276 are different than the plurality of holes 176 of ring seal 150.

Disk 274 of ring seal 250 includes the plurality of holes 276 that have an increased diameter over the plurality of holes 176 of ring seal 150. Also, the plurality of holes 276 extend through disk 274 at a nonperpendicular angle when measured in relation to a surface of disk 274 (and approximately horizontal when viewed in relation to gas turbine engine 10 in which ring seal 250 is implemented). The plurality of holes 276 can have any size, shape, and configuration that meters cooling air flow 70, and the size, shape, and configuration is dependent on the amount of cooling air flow 70 needed for internal components 68, the temperature of cooling air flow 70, the velocity of cooling air flow 70, and other factors.

Rail 278 of ring seal 250 has a length that is longer than rail 178 of ring seal 150, with rail 278 having a length that is approximately equal to a distance between radially outer end 280A and radially inner end 280B (i.e., a length of disk 274). Ring seal 250 can have any length of rail 278, but rail 278 should have a length that is sufficient to direct cooling air flow 70 away from turbine case 52 and towards internal components 68. The length of rail 278 can depend on a number of factors, including the diameter/surface area of each of the plurality of holes 276, the flow velocity of cooling air flow 70, the angle at which each of the plurality of holes 276 extends through disk 274, a distance from the plurality of holes 276 to rail 278, whether disk 274 is angled, and other factors.

The flow metering and directing ring seal 150/250 for use in gas turbine engine 10 or another type of engine is disclosed herein that includes disk 174/274 with the plurality of holes 176/276 extending through disk 174/274 to meter cooling air flow 70 and the flow directing annular rail 178/278 extending away from disk 174/274. The flow metering plurality of holes 176/276 allow cooling air flow 70 to flow through gas turbine engine 10 to internal components 68 of turbine section 21. Rail 178/278 directs cooling air flow 70 away from turbine case 52 radially outward from ring seal 150/250 and towards internal components 68 of turbine section 21 axially downstream from ring seal 150/250, preventing cooling air flow 70 from contacting turbine case 52 and ensuring cooling air flow 70 reaches internal components 68 of turbine section 21 to reduce deterioration and damage to gas turbine engine 10.

Without rail 178/278, cooling air flow 70 can unintentionally interact with turbine case 52, causing impingement and high convective heat transfer that results in turbine case 52 expanding due to the high temperature of cooling air flow 70. Due to thermal expansion, turbine case 52 can expand radially outward and pull on blade outer air seal 64, which is intended to limit gap 72 between the rotating turbine rotor blade 62 and blade outer air seal 64 of core gas path 42. With blade outer air seal 64 pulled radially outward, gap 72 between rotor blade 62 and blade outer air seal 64 increases, allowing the air flowing through core gas path 42 to seep past rotor blade 62 resulting in a decrease in efficiency of gas turbine engine 10. Therefore, the flow metering and directing ring seal 150/250 with rail 178/278 is important because rail 178/278 directs cooling air flow 70 towards internal components 68 of turbine section 21 and away from turbine case 52, reducing deterioration and damage to gas turbine engine 10 and increasing efficiency of gas turbine engine 10 by preventing the increase in gap 72 between rotor blade 62 blade outer air seal 64 of core gas path 42 through turbine section 21.

### Discussion of Possible Embodiments

The following are non-exclusive descriptions of possible embodiments of the present invention.

A seal ring includes a disk having a radially outer end and an orifice at a center forming a radially inner end, a plurality of holes extending through the disk, and a rail having an annular shape extending axially away from the disk at a position that is between the radially outer end and the plurality of holes extending through the disk with the rail being configured to direct the flow of fluid.

The seal ring of the preceding paragraph can optionally include, additionally and/or alternatively, any one or more of the following features, configurations and/or additional components:
The rail is connected to the disk at a position that is closer to the radially outer end than to the radially inner end of the disk.

The radially outer end of the disk is axially forward from the radially inner end so the disk is a frustoconical shape.

Each of the plurality of holes includes a fillet configured to direct the flow of fluid through the plurality of holes.

The plurality of holes is arranged circumferentially around the disk and extends at an angle that is perpendicular to the disk.

Each of the plurality of holes are equally spaced from adjacent holes.

The number of the plurality of holes is between 40 and 100.

Each of the plurality of holes have an equal cross-sectional area to one another.

A ratio of a length of the rail to a length of the disk is approximately 1.

A tip of the rail is tapered.

A coating on an axially forward facing surface of the radially outer end and on an axially rearward facing surface of the radially inner end.

A metering seal in a turbine section of a gas turbine engine includes a sealing ring extending between a vane support on a radially outer end and a vane outer shroud on a radially inner end, a series of holes extending through the sealing ring, and a wall connected to the sealing ring. The wall has an annular shape and extending in an axial direction and is configured to direct the flow of a cooling fluid to at least partially prevent the cooling fluid from contacting a turbine case radially outward from the metering seal.

The metering seal of the preceding paragraph can optionally include, additionally and/or alternatively, any one or more of the following features, configurations and/or additional components:
A size of each hole of the series of holes is dependent on an amount of cooling fluid needed to be supplied to the turbine section.

A ratio of a radial thickness of the wall to an axial thickness of the sealing ring is approximately 1.

The sealing ring and wall are one continuous and monolithic component.

A seal, which the Applicant expressly reserves the right to claim independently, includes a ring with an enlarged radially outer end, an enlarged radially inner end, and a middle section between the radially outer end and the radially inner end and having a thickness that is less than a thickness of the radially outer end and a thickness of the radially inner end to form a dog-bone shape. The seal also includes a rail having an annular shape that extends away from the middle section of the ring.

The seal of the preceding paragraph can optionally include, additionally and/or alternatively, any one or more of the following features, configurations and/or additional components:
A hard-faced coating on an axially forward facing surface of the radially outer end and on an axially rearward facing surface of the radially inner end.

The radially outer end is axially forward from the radially inner end and the plurality of holes extend through the middle section at an angle that is perpendicular to the middle section.

A tip of the rail is axially rearward from the radially inner end of the ring.

A ratio of a length of the rail to a length of the ring is between approximately 0.1 and 1.0.

Any relative terms or terms of degree used herein, such as "substantially," "essentially," "generally," "approximately," and the like should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations; incidental alignment variations; alignment or shape variations induced by thermal, rotational, or vibrational operational conditions; and the like.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A seal ring (150; 250) comprising:
a disk (174; 274) having a radially outer end (180A; 280A) and an orifice at a center forming a radially inner end (180B; 280B);
a plurality of holes (176; 276) extending through the disk (174; 274); and
a rail (178; 278) having an annular shape extending axially away from the disk (174; 274) at a position that is between the radially outer end (180A; 280A) and the plurality of holes (176; 276) extending through the disk (174; 274), the rail (178; 278) being configured to direct the flow of fluid (70).

2. The seal ring of claim 1, wherein the rail (178; 278) is connected to the disk (174; 274) at a position that is closer to the radially outer end (180A; 280A) than to the radially inner end (180B; 280B) of the disk (174; 274).

3. The seal ring of claim 1 or 2, wherein the radially outer end (180A; 280A) of the disk (174; 274) is axially forward from the radially inner end (180B; 280B) so the disk (174; 274) is a frustoconical shape.

4. The seal ring of any preceding claim, wherein each of the plurality of holes (176; 276) includes a fillet (182; 282) configured to direct the flow of fluid (70) through the plurality of holes (176; 276).

5. The seal ring of any preceding claim, wherein the plurality of holes (176) is arranged circumferentially around the disk (174) and extends at an angle that is perpendicular to the disk (174).

6. The seal ring of any preceding claim, wherein each of the plurality of holes (176; 276) is equally spaced from adjacent holes (176; 276).

7. The seal ring of any preceding claim, wherein the number of the plurality of holes (176; 276) is between 40 and 100.

8. The seal ring of any preceding claim, wherein each of the plurality of holes (176; 276) has an equal cross-sectional area to one another.

9. The seal ring of any preceding claim, wherein a ratio of a length of the rail (178; 278) to a length of the disk (174; 274) is approximately 1.

10. The seal ring of any preceding claim, wherein a tip (184; 284) of the rail is tapered.

11. The seal ring of any preceding claim, further comprising:
a coating (186; 286) on an axially forward facing surface of the radially outer end (180A; 280A) and on an axially rearward facing surface of the radially inner end (180B; 280B).

12. A metering seal (150; 250) in a turbine section (21, 21A, 21B) of a gas turbine engine (10) comprising:
a sealing ring (150; 250) extending between a vane support (60) on a radially outer end (180A; 180B) and a vane outer shroud (58) on a radially inner end (180B; 280B);
a series of holes (176; 276) extending through the sealing ring (150; 250); and
a wall (178; 278) connected to the sealing ring (150; 250) with the wall (178; 278) having an annular shape and extending in an axial direction, the wall (178; 278) being configured to direct the flow of a cooling fluid (70) to at least partially prevent the cooling fluid (70) from contacting a turbine case (52) radially outward from the metering seal (150; 250).

13. The metering seal of claim 12, wherein a size of each hole (176; 276) of the series of holes (176; 276) is dependent on an amount of cooling fluid (70) needed to be supplied to the turbine section (21, 21A, 21B).

14. The metering seal of claim 12 or 13, wherein a ratio of a radial thickness of the wall (178; 278) to an axial thickness of the sealing ring (150; 250) is approximately 1.

15. The metering seal of any of claims 12 to 14, wherein the sealing ring (150; 250) and wall (178; 278) are one continuous and monolithic component.
